# EUROPEAN PATENT SPECIFICATION

(11) **EP 4 468 253 B1**
(45) Date of publication and mention of the grant of the patent: **28.10.2026**
(21) Application number: 23305825.4
(22) Date of filing: 24.05.2023
(51) Int. Cl.: G06V 10/771, G06V 10/82, G06V 20/40, G06V 40/20

(54) **GENERATION MODULE AND METHOD FOR GENERATING A COMPOSED OUTPUT SIGNAL**
ERZEUGUNGSMODUL UND VERFAHREN ZUR ERZEUGUNG EINES ZUSAMMENGESETZTEN AUSGANGSSIGNALS
MODULE DE GÉNÉRATION ET PROCÉDÉ DE GÉNÉRATION D'UN SIGNAL DE SORTIE COMPOSÉ

(43) Date of publication of application: 27.11.2024
(73) Proprietor: TOYOTA JIDOSHA KABUSHIKI KAISHA, Toyota-shi, Aichi-ken, 471 8571 (JP); Institut National de Recherche en Informatique et en Automatique, 78153 Le Chesnay Cedex (FR)
(72) Inventor: FRANCESCA, Gianpiero, 1140 BRUSSELS (BE); GARATTONI, Lorenzo, 1140 BRUSSELS (BE); KONG, Quan, TOKYO, 103-0022 (JP); YANG, Di, 06902 VALBONNE (FR); BREMOND, François, 06902 VALBONNE (FR)
(74) Representative: Cabinet Beau de Loménie

(56) References cited:
- DE-A1- 102023 111 942
- US-A1- 2022 148 335
- US-A1- 2022 269 937
- MARSOT MATHIEU ET AL: "A Structured Latent Space for Human Body Motion Generation", 2022 INTERNATIONAL CONFERENCE ON 3D VISION (3DV), IEEE, 12 September 2022 (2022-09-12), pages 557 - 566, XP034298390, DOI: 10.1109/3DV57658.2022.00066
- YANG DI ET AL: "Self-Supervised Video Representation Learning via Latent Time Navigation", ARXIV.ORG, 10 May 2023 (2023-05-10), pages 1 - 9, XP093379995, Retrieved from the Internet <URL:https://doi.org/10.48550/arXiv.2305.06437> [retrieved on 20260414], DOI: 10.48550/ARXIV.2305.06437

## Description

### BACKGROUND OF THE INVENTION

### 1. Field of the invention

The present disclosure relates to the field of machine learning, in particular pattern detection or segmentation in input signals. More particularly, the present disclosure relates to a generation module for generating a composed output signal from two or more input signals, a generation method, a training method for the generation module and a training method for a pattern segmentation system. The generation module and method may find applications in all kinds of industries, including the automotive industry. For instance, the generation module and method may be used to train a machine learning model to understand a vehicle's environment in order to adequately control it, or to monitor and support human activities in places such as a factory.

### 2. Description of Related Art

Reliably recognizing patterns in input signals is a challenge for many applications, such as action recognition in videos, voice characteristics recognition in audio recordings, abnormality detection in medical measurements, etc.

In the case of action recognition, some approaches have focused on trimmed videos containing single actions, which constitutes a highly simplified scenario. Indeed, in untrimmed videos, two or more actions often overlap, e.g. occur simultaneously. This type of situations cannot be captured well by the currently available methods.

The following references disclose various methods relating to the field of computer vision and machine learning and to techniques used to perform such tasks.
[REF. 1] Kfir Aberman, Rundi Wu, Dani Lischinski, Baoquan Chen, and Daniel Cohen-Or. Learning character-agnostic motion for motion retargeting in 2D. ACM TOG, 2019.
[REF. 2] Kaiming He, Haoqi Fan, Yuxin Wu, Saining Xie, and Ross Girshick. Momentum contrast for unsupervised visual representation learning. In CVPR, 2020.
[REF. 3] Di Yang, Yaohui Wang, Antitza Dantcheva, Lorenzo Garattoni, Gianpiero Francesca, and Francois Bremond. Unik: A unified framework for real-world skeleton-based action recognition. In BMVC, 2021.
[REF. 4] Aaron van den Oord, Yazhe Li, and Oriol Vinyals. Representation learning with contrastive predictive coding. In arXiv:1807.03748, 2018.
[REF. 5] Z. Wu, Y. Xiong, S. X. Yu, and D. Lin. Unsupervised feature learning via non-parametric instance discrimination. In CVPR, 2018.
[REF. 6] Christoph Feichtenhofer, Haoqi Fan, Bo Xiong, Ross Girshick, and Kaiming He. A large-scale study on unsupervised spatiotemporal representation learning. In CVPR, 2021.
[REF. 7] Yanghao Li, Cuiling Lan, Junliang Xing,Wenjun Zeng, Chunfeng Yuan, and Jiaying Liu. Online human action detection using joint classification-regression recurrent neural networks. In ECCV, 2016.
US 2022/148335 discloses disentangled representations for gait recognition.
Mathieu Marsot et al: "A structured latent space for human body motion generation" 2022 International conference on 3D vision, IEEE, 12 September 2022, pages 557-566, DOI: 10.1109/3DV57658.2022.00066, discloses a framework to learn a structured latent space to represent 4D human body motion.
US 2022/269937 discloses generating frames for neural simulation using one or more neural networks.
Yang Di ET AL: "Self-Supervised Video Representation Learning via Latent Time Navigation", arXiv.org, 10 May 2023, pages 1-9, discloses a time-parameterized contrastive learning strategy that is streamlined to capture finegrained motions.

### SUMMARY

The object of the present invention is to at least substantially remedy the above-mentioned drawbacks

The invention is set out in the independent claims.

In this respect, the present disclosure relates to a generation module for generating a composed output signal from two or more input signals representing respective patterns, the generation module being configured to:
- encode the two or more input signals onto a latent space;
- decompose the encoded input signals into a first component along one or more pattern-related directions of the latent space, and a second component along one or more pattern-unrelated directions of the latent space;
- generate a latent output signal having, as the first component, a combination of the respective first components of at least two of the encoded input signals;
- decode the latent output signal to obtain the composed output signal.

As used herein, for conciseness and unless the context indicates otherwise, "a", "an", and "the" are intended to refer to "at least one" or "each" and to include plural forms as well. Conversely, generic uses of the plural form may include singular elements.

The generation module may have the hardware structure of a computer. In particular, the generation module may comprise a processor configured to carry out the above-defined steps.

The two or more input signals represent patterns. Each input signal may represent one or more respective patterns.

The input signals may be obtained from a sensor, e.g. a microphone, an imaging device such as a camera, electrodes, etc. The input signals may be pre-processed as necessary to be ready for encoding and more generally for processing by the generation module.

A latent space is a multi-dimensional space which contains representations of the input signals, generated by an encoder. For example, a latent representation (i.e. an encoded input signal) may be determined based on the content of the input signal. In the field of computer vision, an example would be to take the image content in the signal and process it by at least one layer of a neural network, in order to obtain the latent representation/encoded input signal.

More generally, the generation module may comprise an encoder model to encode the input signals. The encoder model may be a machine learning model. A machine learning model may comprise one or more mathematical expressions configured to process the input signal in order to output a representation thereof, in the latent space (also known as representation space or feature space). Weights of the machine learning model may be iteratively updated by learning. The machine learning model may comprise an artificial neural network. An artificial neural network (ANN) is a computational model with one or more neurons, each neuron having a transfer function. The ANN therefore has a global transfer function that allows the calculation of at least one output as a function of at least one input. The neurons may be structured in one or more layers. The transfer functions of each neuron or the relative weights of the neurons in the network can be weighted by coefficients called synaptic weights (or simply weights) and bias. The weights can be modulated according to the training of the ANN. During the training process, the ANN adapts its synaptic weights and biases to conform to training situations, possibly with some tolerance.

In the latent space, some directions (dimensions) may be related to the pattern, while other directions may be unrelated to the pattern. For instance, in a video, some aspects of the video may be related to an action performed by a person (e.g. motion of the person), while other aspects may be unrelated to said action (e.g. physical appearance of the person). The latent space may be organized (or, as will be explained later, learnt) to separate pattern-related directions from pattern-unrelated directions. The pattern-related and pattern-unrelated directions of the latent space may form a basis (also known as a dictionary) of the latent space.

Thus, each encoded input signal can be decomposed into a pattern-related first component and a pattern-unrelated second component. Such a latent space enables to disentangle pattern-related features from patent-unrelated features.

The generating function of the generation module creates, in the latent space, an output having pattern-related features (i.e. a component along the pattern-related directions) which are a combination of the respective (pattern-related) first components of the encoded input signals. The combination takes into account at least two encoded input signals. The combination may thus reflect features from at least two first components.

The second component of the latent output signal may be either one of the second components of the encoded input signals, or even a combination thereof: as the second component is not related to the pattern, the choice of the second component is less important for pattern-oriented tasks.

The latent output signal may then be decoded to provide an output signal that may be usable along with the input signals. The decoded latent output signal is a composed output signal as it was generated by composing respective patterns from a plurality of input signals.

Thanks to the above features, the generation module can generate new signals representing a composed pattern. This enables to provide a more comprehensive signal database for training a machine learning system not only on simple input signals but also on more complex ones. Accordingly, complex patterns may be detected or segmented more reliably. In addition, multi-label pattern detection and segmentation is improved.

Optionally, at least one of the input signals comprises a sequence of frames. A sequence of frames is an ordered series of frames along one dimension, known as the succession dimension, which can be e.g. time or space. A few examples are given below:
- the sequence of frames may be an audio track, i.e. a succession of sounds over time;
- the sequence of frames may be a video, i.e. a succession of images over time, or a plurality of images;
- the sequence of frames may be a three-dimensional (3D) image, seen as a succession of two-dimensional images over a succession dimension which is a third spatial dimension;
- the sequence of frames may be a strip of images (e.g. satellite images), i.e. a succession of images over a spatial dimension;
- the sequence of frames may be an electrical signal (e.g. an electrocardiogram input), i.e. a succession of electrical values over time.

The contents of the frames may be such that a plurality of frames forms a pattern.

Optionally, the sequence of frames represents an evolution of a graph representation. A graph representation is a representation comprising at least one vertex and at least one edge, the edge connecting vertices with one another. For instance, in the case of action recognition in a video, it is possible to model a living being by a graph representation. The vertices of the graph representation may correspond to some living being's joints, while the edges of the graph representation may correspond to some living being's bones. In other words, the graph more or less diagrammatically represents the living being's skeleton. The graph representation (skeleton) may be generated from videos or image sequences by pose estimation techniques.

Thus, optionally, the patterns include actions performed by an object or a living being. The object may be an animated object such as a robotic device or a vehicle. The living being may be a human being, an animal or a plant.

Optionally, the one or more pattern-related directions relate to dynamic information of the input signals and the one or more pattern-unrelated directions relate to static information of the input signals. It is assumed that static information, i.e. information that may be taken from an isolated part of the signal (e.g. a frame), is present irrespective of the succession dimension, hence irrespective of the pattern, whereas dynamic information, i.e. information that can only be derived over the succession dimension, represent information that may be related to the pattern. For instance, when the patterns include actions, the pattern-related directions may relate to (motion) dynamic information representative of the action whereas the pattern-unrelated directions may relate to (character) static information about the object or the living being performing the action. In separating static information from dynamic information, the proposed generation module provides better composed output signals.

Optionally, the generation module is configured to output the composed output signal in a same space as the input signals. Thus, a training dataset may be formed simply from both the input signals and the composed output signal. For instance, if each of the input signals is a skeleton sequence, the composed output signal may be a skeleton sequence, Moreover, the input signals may have the same length in the succession dimension, e.g. have the same number of frames, and the composed output signal may have that same length too. The input signals may be uniformed during a preprocessing stage.

Optionally, the combination comprises a linear combination. The combination is thus simple and reflects a plurality of patterns of the input signals. The linear combination may be an average, specifically a non-weighted average.

The present disclosure further relates to a computer-implemented generation method for generating a composed output signal from two or more input signals representing respective patterns, the generation method comprising:
- encoding the two or more input signals onto a latent space;
- decomposing the encoded input signals into a first component along one or more pattern-related directions of the latent space, and a second component along one or more pattern-unrelated directions of the latent space;
- generating a latent output signal having, as the first component, a combination of the respective first components of at least two of the encoded input signals;
- decoding the latent output signal to obtain the composed output signal.

The generation method may be carried out by the above generation module. The generation method may have any or all of the features described above with respect to the generation module.

The present disclosure further relates to a computer-implemented training method for the above-described generation module, comprising:
- providing two or more input signals;
- encoding the input signals onto a latent space with the generation module;
- decomposing the encoded input signals into a first component along one or more pattern-related directions of the latent space, and a second component along one or more pattern-unrelated directions of the latent space;
- generating at least one latent output signal having, as the first component, the first component of one of the encoded input signals and, as the second component, the second component of another one of the input signals;
- decoding the at least one latent output signal;
- training the generation module based on the at least one decoded output signal.

The providing, encoding, decomposing and decoding may be carried out similarly to the steps explained with respect to the generation module. However, instead of generating a latent output signal having a combination of the respective first components as a first component of the latent output signal, the training method generates a latent output signal having the first component of a first encoded input signal and the second component of a second encoded input signal. In other words, the training method mixes (swaps) the first and second components from different encoded input signals respectively, but does not combine several first components or several second components. In the case of action recognition, such a generation is sometimes referred to as motion retargeting.

In the training step, the decoded output signal is used to train the generation module. The training step may comprise updating the weights of the generation module (e.g. of the encoder and/or decoder). The training step may comprise further training the generation module based on the two or more input signals. The training may be supervised.

Thanks to the generating step, the pattern of a first input signal may be learnt by the generation module when being associated with both the pattern-unrelated component of the first input signal (corresponding to the one encoded input signal) and the pattern-unrelated component of the second input signal (corresponding to the other encoded input signal). Accordingly, the generation module has better generalization ability for recognizing the pattern.

Optionally, the input signals are associated with respective labels, the at least one decoded output signal is associated with the label of the one encoded input signal, and the training is supervised based on the labels. Therefore, training may be carried out in a supervised way without heavy annotation cost, because the labels of the decoded output signal(s) are inherited automatically from the input signals.

The present disclosure further relates to a computer-implemented training method for a pattern segmentation system, comprising:
- providing a dataset comprising input signals representing respective patterns;
- generating at least one composed output signal from the input signals with the above-described generation module or generation method;
- training the pattern segmentation system based on the dataset and the at least one composed output signal.

A pattern segmentation system, e.g. an action segmentation system, is known per se in the art and may be chosen as desired. For instance, the pattern segmentation system may comprise at least one machine learning model to be trained. Training the pattern segmentation system with not only simple patterns (e.g. the input signals) but also composed patterns (e.g. the composed output signal) improves the detection or segmentation ability of the pattern segmentation system.

The pattern segmentation system may be pre-trained, and the above training method may serve as a fine-tuning method.

Optionally, the training the pattern segmentation system is unsupervised. That is, no labels may be provided to the pattern segmentation system. This is advantageous as the composed output signal, output by the generation module or method, may not comprise any label. Therefore, no costly annotation is required.

Optionally, the training uses contrastive learning. Contrastive learning is known per se in the art and is based on building so-called positive pairs and negative pairs, wherein positive pairs are supposed to represent similar inputs whereas negative pairs are supposed to represent dissimilar inputs. The machine learning model is trained to make the elements of a positive pair close to each other and to space elements of a negative pair apart. Contrastive learning is an effective technique of unsupervised learning. However, other self-supervised learning techniques could be used.

Optionally, the at least one composed output signal comprises a first output signal and a second output signal having a same pattern-related component and different patent-unrelated components. Although not made explicit for the sake of conciseness, the pattern-related and pattern-unrelated components of course refer to the latent version of the corresponding composed output signals. The first output signal and the second output signal may form a positive pair for contrastive learning, because they represent a same pattern.

In other words, the proposed generation module and method are particularly suitable for generating a training dataset adapted to contrastive learning, because positive pairs can be built easily.

Optionally, an encoder of the pattern segmentation system comprises a first encoder model configured to encode the input signal as a whole and a second encoder model configured to encode the input signal frame by frame. Both encoders may be trained by the above training method. This enables to improve generalization onto frame-wise action segmentation tasks.

The present disclosure is further related to a computer program set including instructions for executing the steps of the above described generation method or training method when said program is executed by at least one computer. This program set can use any programming language and take the form of source code, object code or a code intermediate between source code and object code, such as a partially compiled form, or any other desirable form.

The present disclosure is further related to a recording medium readable by at least one computer and having recorded thereon at least one computer program including instructions for executing the steps of the above described generation method or training method. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- Fig. 1 is a diagrammatic view of a generation module according to an embodiment;
- Fig. 2 is a flowchart of a generation method and a training method according to an embodiment;
- Fig. 3 illustrates a composed output signal according to an embodiment.

### DETAILED DESCRIPTION OF EMBODIMENTS

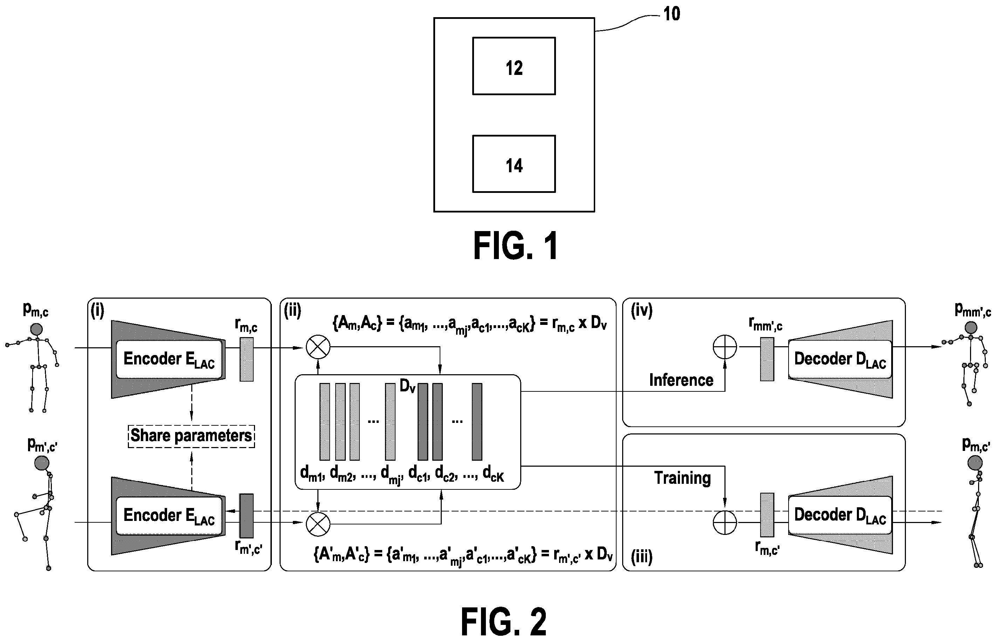

Figure 1 illustrates a generation module 10 according to an embodiment. The generation module 10 may have the hardware structure of a computer. The generation module 10 may comprise a processor 12 (shared, dedicated, or group) and a memory 14, and/or other suitable components that provide the described functionality. In particular, inputs and/or outputs may be provided as desired, e.g. an input to receive inputs signals and an output to output at least one composed output signal.

The memory 14 of the generation module 10 may form a recording medium readable by at least one computer and having recorded thereon at least one computer program including instructions for executing the steps of the generation method defined hereinafter. Such a computer program defines functions of the generation module 10, whereby the generating module 10 is configured to configured to encode two or more input signals onto a latent space; decompose the encoded input signals into a first component along one or more pattern-related directions of the latent space, and a second component along one or more pattern-unrelated directions of the latent space; generate a latent output signal having, as the first component, a combination of the respective first components of at least two of the encoded input signals; and decode the latent output signal to obtain a composed output signal.

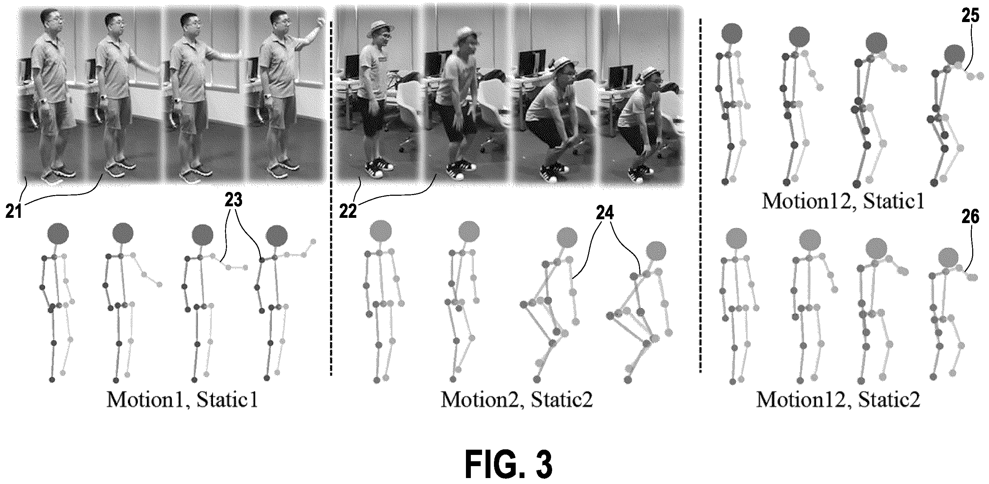

These steps and the corresponding generating method are described in more detail with reference to Figs. 2 and 3. Hereinafter, an embodiment of the generation method focuses on an application to recognizing actions in a video, i.e. recognizing a pattern in an input signal, wherein each pattern corresponds to an action performed in the input signal which is a video or an output of a suitable video preprocessing. However, the principles explained herein can be generalized by the skilled person to other input signals than videos, and other succession dimensions than time. The input signal is selected from a group comprising a plurality of images, a video, an audio track, an electrical input, or a combination thereof.

Thus, the generating method as described herein, also referred to as Latent Action Composition (LAC), is a computer-implemented method for generating a composed output signal from two or more input signals representing respective patterns.

The input signals may comprise a sequence of frames over a succession dimension (e.g. a series of images over time). The sequence of frames may represent an evolution of a graph representation. Specifically, in the illustrated examples, the actions may be performed by human beings, and the human beings are detected in the images in the form of graphs. That is, a graph representation models an object or a living being (here, a human) performing or subject to the action in a 2D or 3D length space. In this embodiment, a graph representation is also referred to as a skeleton, for greater
conciseness and intelligibility. In short, the input signal may comprise a skeleton sequence. The input skeletons may be in 3D or 2D. However, the principles explained hereinafter can be generalized by the skilled person to graph representations representing anything else than an object or a living being.

Videos show a lot of information, some of which are related to the action to detect, while others are unrelated to the action to detect. This applies likewise to the skeleton itself: for instance, static information of a skeleton sequence, such as the viewpoint, the body size of the subject, etc. are not related to the action, while dynamic or temporal information, e.g. the dynamics of the action performed, intrinsically relates to the action. Hereinafter, the static information may be denoted as 'Static', while the dynamic information may be denoted as 'Motion'.

As shown in Fig. 2, the generation module comprises an encoder and a decoder for skeleton sequences. The generation module may be configured to output the composed output signal in a same space as the input signals, that is, the generation module may be an autoencoder.

Basically, to disentangle 'Motion' features from 'Static' in a linear latent space, the generation module relies on a Linear Action Decomposition mechanism to learn an action dictionary where each pattern-related direction represents a basic high-level action for the skeleton encoding. Motion retargeting is applied for training the autoencoder *(i.e.,* transferring the motion of one skeleton sequence, known as a driving skeleton sequence, to another skeleton sequence, known as the source skeleton sequence, maintaining the source skeleton invariant in 'Static' features such as viewpoint and body size). In the inference stage, the extracted 'Motion' features from multiple skeleton sequences can be combined linearly and composed skeletons can be generated by the decoder.

For instance, the input skeleton sequence (example of an input signal) with 'Static' c and 'Motion' m is modeled by a spatio-temporal matrix, noted as ${p}_{m , c} ∈ {ℝ}^{T \times V \times {C}_{in}}$ . *T, V,* and *Cᵢₙ* respectively represent the length of the video (e.g. the number of frames), the number of body joints in each frame, and the input channels (*Cᵢₙ* = 2 for 2D data, or *Cᵢₙ* = 3 for 3D skeletons). As shown in Fig. 2 (i), LAC adopts an encoder *E*_{LAC} to embed at least two, e.g. a pair of, input skeleton sequences ***p**_{m,c}, **p**_{m',c'}* into ***r**_{m,c},* ${r}_{m ′ , c ′} ∈ {ℝ}^{T ′ \times {C}_{out}}$ ( ${ℝ}^{T ′ \times {C}_{out}}$ being an example of a latent space). *T'* is the size of temporal dimension after encoding (e.g. convolutions) and *Cₒᵤₜ* is the output channel size. A skeleton sequence decoder D*_{LAC}* (see Fig. 2.(iii)) is used to generate new skeleton sequences from the latent space. The autoencoder may be designed by multiple 1D temporal convolutions and upsampling to respectively encode and decode the skeleton sequence.

The goal of Linear Action Decomposition (LAD) is disentangle pattern-related features from pattern-unrelated features, e.g. to obtain the 'Motion' features on top of the encoded latent code of a skeleton sequence. The inventors' insight is that the high-level action of a skeleton sequence can be considered as a combination of multiple basic and independent 'Motion' and 'Static' transformations (*e.g.,* raising hand, bending over) with their amplitude from a fixed reference pose *(i.e.,* standing in the front view). Hence, as shown in Fig. 2(ii), the basic 'Static' and 'Motion' transformations are explicitly modelled using a unified action dictionary for the encoded latent skeleton features. For instance, a learnable orthogonal basis, noted as ***D**ᵥ* = {*d*_{***m***1}, *d*_{***m***2},..., *d_{**m**J}, d*_{***c***1}*, d*_{***c***2},..., *d_{**c**K}*} with *J* ∈ [1, *Cₒᵤₜ*) and *K* = *Cₒᵤₜ - J,* is predefined, where each vector indicates a basic 'Motion'/'Static' transformation from the reference pose. That is, ***D**ᵥ* is an example of a basis of the latent space where *d*_{***m***1} *d*_{***m***2},..., *d_{**m**J}* are one or more pattern-related directions and *d*_{*c*1}, *d*_{*c*2},*..., d_{cK}* are one or more pattern-unrelated directions. The one or more pattern-related directions here relate to dynamic information of the input signals, while the one or more pattern-unrelated directions here relate to static information of the input signals. Due to ***D**ᵥ* entailing an orthogonal basis, any two directions *dᵢ, dⱼ* follow the constraint: $\left〈{d}_{i}, {d}_{j}\right〉 = \left\{\begin{matrix}0 & i \neq j \\ 1 & i = j .\end{matrix}\right.$ (1)

For instance, for *Cₒᵤₜ* = 160, *J* may range from 16 to 144. In an example, J=128 and K=32.

In an embodiment, ${D}_{v} ∈ {ℝ}^{{C}_{out} \times {C}_{out}}$ may be implemented as a learnable matrix. The Gram-Schmidt algorithm may be applied during each forward pass in order to satisfy the orthogonality. Then, given that basis, the encoded input signal ***p**_{m,c}* may be decomposed into a first component ***r**ₘ* along the pattern-related directions and a second component ***r**_{c}* along the pattern-unrelated directions. The 'Motion' features of ***p**_{m,c},* denoted as ***r**ₘ*, may be regarded as a linear combination between motion orthogonal directions in ***D**ᵥ,* and associated magnitudes (amplitude) *Aₘ* = {*a*_{*m*1}, *a*_{*m*2},*...*, *a_{mJ}*}. Similarly, the 'Static' features ***r**_{c}* may be the linear combination between 'Static' orthogonal directions in ***D**ᵥ,* and associated magnitudes *A_{c}* = {*a*_{*c*1}, *a*_{*c*2},... , *a_{cK}*}. For the other input signal ***p**_{m',c'},* its decomposed components ***r**_{m'}, **r**_{c'}* can be obtained in the same way: $\begin{matrix}{r}_{m} = {\sum }_{i = 1}^{J} {a}_{mi} {d}_{{m}_{i}} , & {r}_{c} = {\sum }_{i = 1}^{K} {a}_{ci} {d}_{{c}_{i}} , \\ {r}_{m ′} = {\sum }_{i = 1}^{J} a {′}_{mi} {d}_{{m}_{i}} , & {r}_{c ′} = {\sum }_{i = 1}^{J} a {′}_{mi} {d}_{{c}_{i}} .\end{matrix}$ (2)

For the skeleton encoding ***r**_{m,c}*/***r**_{m',c'},* the set of magnitudes *Aₘ*/*Aₘ'* and *A_{c}*/*A_{c}*' can be computed as the projections of *r_{m,c}*/*r_{m',c'}* onto ***D**ᵥ* (see Eq. 3). As ***r**_{m,c}* has the temporal dimension of size *T',* for each 'Motion' feature in the temporal dimension, *T'* sets of motion magnitudes *Aₘ* can be obtained to represent the temporal dynamics of ***r**ₘ*. For *r_{c},* as static information, the temporal dimension of ***r**_{m,c}* may first be averaged by average pooling and then projected to obtain a unified *A_{c}.* With such trained LAD, the decoder D*_{LAC}* can generate different skeleton sequences by taking an arbitrary combination of magnitudes *Aₘ* and *A_{c}* along their corresponding directions as input. The high-level action can thus be controlled by the manipulations in the latent space. $\begin{matrix}{a}_{mi} = \frac{\left〈{r}_{m , c}⋅{d}_{{m}_{i}}\right〉}{{\left‖{d}_{{m}_{i}}\right‖}^{2}} , & {a}_{ci} = \frac{\left〈{r}_{m , c}⋅{d}_{{c}_{i}}\right〉}{{\left‖{d}_{{c}_{i}}\right‖}^{2}} , \\ a {′}_{mi} = \frac{\left〈{r}_{m ′ , c ′}⋅{d}_{{m}_{i}}\right〉}{{\left‖{d}_{{m}_{i}}\right‖}^{2}} , & a {′}_{ci} = \frac{\left〈{r}_{m ′ , c ′}⋅{d}_{{c}_{i}}\right〉}{{\left‖{d}_{{c}_{i}}\right‖}^{2}} .\end{matrix}$ (3)

Training of the generation module is more specifically illustrated by blocks (i), (ii) and (iii) in Fig. 2.

As described above, a computer-implemented training method for the generation module 10 comprises providing two or more input signals, here skeleton sequences ***p**_{m,c}, **p**_{m',c'}* described above, encoding the input signals onto a latent space with the generation module (block (i) in Fig. 2), and decomposing the encoded input signals into a first component ***r**ₘ*, ***r**_{m'}*. along one or more pattern-related directions of the latent space, and a second component ***r**_{c}, **r**_{c'}* along one or more pattern-unrelated directions of the latent space. These steps may be carried out as detailed above.

As shown in block (iii) of Fig. 2, the training method further comprises generating at least one latent output signal having, as the first component, the first component of one of the encoded input signals and, as the second component, the second component of another one of the input signals. Specifically, a general motion retargeting (e.g. as in [REF. 1]) may be applied to train the generation autoencoder and ensure that 'Motion' directions in LAD orthogonal basis ***D**ᵥ* are 'Static'-disentangled. For instance, the new retargeted (motion swapped) skeleton sequence, i.e. the output signal, with 'Motion' m, and 'Static' *c',* noted as ***p**_{m,c'}* may be generated from the recombined features, ***r**ₘ* + ***r**_{c'}.* Similarly, ***p**_{m',c}* can also be generated by swapping the pair of sequences, e.g. from the recombined features , ***r**ₘ*. + ***r**_{c}*.

The training method further comprises decoding the at least one latent output signal, here at least one of the latent output signals ***r**ₘ* + ***r**_{c'}* and ***r**_{m'}* + ***r**_{c}*. The decoding, e.g. the skeleton sequence generation, can be formulated as ***p**_{m,c'}* = D*_{LAC}* (***r**ₘ* + ***r***_{*c*'}) and ***p**_{m',c}* = D*_{LAC}* (***r***_{*m*'} *+ **r**_{c}*)*,* as shown in Fig. 2 (iii).

The training method further comprises training the generation module based on the at least one decoded output signal ***p**_{m,c'}, **p**_{m',c},* The training may use a loss function. In an example, the training loss function comprises a reconstruction loss: 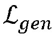 *=* 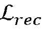 *.* Reconstruction loss aims at guiding the network towards a high generation quality. The reconstruction loss may comprise two components, e.g. linearly combined (e.g. merely added): 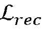 = 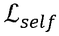 *+* 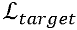 . Specifically, at every training iteration, the decoder network D*_{LAC}* is firstly used to reconstruct each of the original input samples ***p**_{m,c}* using its representation ***r**ₘ* + ***r**_{c}*. This component of the loss is denoted as 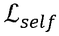 and formulated as a standard autoencoder reconstruction loss (see Eq. 4). $\begin{matrix}{L}_{self} = E \left[{\left‖{D}_{LAC}\left({r}_{m}+{r}_{c}\right)-{p}_{m , c}\right‖}^{2}\right] , \\ {L}_{target} = E \left[{\left‖{D}_{LAC}\left({r}_{m}+{r}_{c ′}\right)-{p}_{m , c ′}\right‖}^{2}\right] .\end{matrix}$ (4)

Moreover, at each iteration, the decoder is also encouraged to re-compose new combinations, namely the retargeted sequences. In order to assess these new combinations, the input signals ***p**_{m,c}, **p**_{m',c'}* may be associated with respective labels, the at least one decoded output signal ***p**_{m,c'}* may be associated with the label of the one encoded input signal ***p**_{m,c},* and the training may be supervised based on the labels. In an example, the generation module is trained on a synthetic dataset including the cross-character motion retargeting ground-truth skeleton sequences, so that a cross reconstruction loss such as 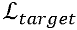 (see Eq. 4) may be explicitly applied through the generation. The same reconstruction losses may also be computed for ***p**_{m',c'}.* Updates of the encoder and decoder of the generation module during training is illustrated by a dashed backwards arrow in Fig. 2.

Inference by the generation module and the generation method is more specifically illustrated by blocks (i), (ii) and (iv) of Fig. 2. In addition to the steps described above in relation to blocks (i) and (ii) of Fig. 2, the generation method comprises generating a latent output signal having, as the first component, a combination of the respective first components of at least two of the encoded input signals, as shown in block (iv). The latent output signal may then be decoded to obtain the composed output signal.

That is, as the trained LAD represents high-level motions in a linear space by the action dictionary, it is possible to generate at the inference stage composed motions by combining 'Motion' features encoded from multiple skeleton sequences. The combination may comprise a linear combination. For instance, the average latent 'Motion' features may be used for the decoder to generate composed motions. Even if in some cases the combined motions may not be realistic, it can still help to increase the expressive power of the representation, which is important to express subtle details. Taking the motion combination of the two input sequences ***p**_{m,c}* and ***p**_{m',c'}* as an example, at least one of the skeleton sequences ***p**_{mm',c}* and ***p**_{mm',c'}* with the motions m and m' combined may be generated as follows: $\begin{matrix}{p}_{mm ′ , c} = {D}_{LAC} \left(\frac{1}{2}\left({r}_{m}+{r}_{m ′}\right)+{r}_{c}\right) , \\ {p}_{mm ′ , c ′} = {D}_{LAC} \left(\frac{1}{2}\left({r}_{m}+{r}_{m ′}\right)+{r}_{c ′}\right) .\end{matrix}$ (5)

It is noteworthy that the two composed output signals of Eq. 5 form a first output signal ***p**_{mm',c}* and a second output signal ***p**_{mm',c'}* having a same pattern-related component and different patent-unrelated components.

The generation module provides composed output signals that may be used to train a pattern segmentation system. The following section provides details of such training according to an embodiment. The pattern segmentation system training may be unsupervised, e.g. self-supervised, optionally using contrastive learning. In this respect, as skeleton sequences ***p**_{mm',c}* and ***p**_{mm',c'}* have the same composed motion but different 'Static' (*e.g.,* viewpoints), they can form a positive pair for self-supervised contrastive learning to train a transferable skeleton visual encoder for fine-grained action segmentation tasks. More generally, other self-supervised learning could be carried out instead of contrastive learning. More generally, other training techniques are encompassed.

In an embodiment, the generated composed skeleton sequence ***p**_{mm',c}* is re-denoted as a query *q* and multiple positive keys (*e.g.,* the sequence ***p**_{mm',c'}*), denoted as ${k}_{1}^{+} , … , {k}_{P}^{+}$*,* can be generated by only modifying the 'Static' magnitudes *A_{c}* of the query in the latent space. An example may follow the general contrastive learning method [REF. 2] based on the momentum encoder, to maximize the mutual information of positive pairs *(i.e.,* the generated composed skeleton sequences with the same Motion but different Statics), while pushing negative pairs (*i.e.,* other skeleton sequences with different Motions) apart.

Optionally, an encoder of the pattern segmentation system comprises a first encoder model configured to encode the input signal as a whole and a second encoder model configured to encode the input signal frame by frame. The corresponding first and second decoder models may be provided likewise. For instance, deviating from [REF. 2], the queue (memory) [REF. 2] may store the features of each frame for skeleton sequences and it is possible to additionally enhance the per-frame representation similarity of positive pairs. The visual encoder can extract skeleton features that are globally invariant and also finely invariant to data augmentation and can generalize better to frame-wise action segmentation tasks.

To have a strong capability to extract skeleton spatio-temporal features, the recent topology-free skeleton backbone network UNIK [REF. 3] may be adopted as the skeleton visual encoder (e.g. as the pattern segmentation system) E*_{V}* (see Tab. 1 below for details). To obtain the global sequence space, temporal average pooling layer may be used to merge the temporal dimension of the visual representations, denoted as ${E}_{Vs} \left(q\right) , {E}_{Vs} \left({k}_{1}^{+}\right) , … , {E}_{Vs} \left({k}_{P}^{+}\right) ∈ {ℝ}^{{C}_{out} \times 1}$ (see Tab. 1).

**[Table 1]**

| **Stages** | **E**_{LAC} | **D**_{LAC} | **E**_{V} |
|---|---|---|---|
| Input | 2D sequence [T, 2V] | Rep. [T', 160] | 2D sequence [T × *V,* 2] |
| 1 | Conv (8, 64) | Upsample (2) | $Conv \left(\begin{matrix}1 \times 1 & 64 \\ 3 \times 1 & 64\end{matrix}\right) \times 4$ |
| | | Conv (7, 128) | |
| 2 | Conv (8, 64) | Upsample (2) | $Conv \left(\begin{matrix}1 \times 1 & 128 \\ 9 \times 1 & 128\end{matrix}\right) \times 3$ |
| | | Conv (7, 64) | |
| 3 | Conv (8, 160) | Upsample (2) | $Conv \left(\begin{matrix}1 \times 1 & 256 \\ 9 \times 1 & 256\end{matrix}\right) \times 3$ |
| | | Conv (7, 2V) | |
| 4 | - | - | S-GAP (2 × *V*, 256) |
| Rep. | - | - | E_{Vf}: [T, 256] |
| | | | E_{Vs}: T-GAP to [1, 256] |
| 5 | - | - | FC, Softmax |
| Output | Rep. [T', 160] | 2D sequence [T, 2V] | Per-frame action class |

Example of main building blocks of the networks in the generation module (LAC) and the pattern segmentation system (UNIK). Taking the 2D sequence as an example, the dimensions of kernels are denoted by t × s, c (2D kernels) and t, c (1D kernels) for temporal, spatial, channel sizes. S/T-GAP, FC denotes temporal/spatial global average pooling, and fully-connected layer respectively. Rep. indicates the learned representation.

Per-frame features can be obtained by E*_{V}* before the temporal average pooling layer (see Tab. 1) and are denoted as ${E}_{Vs} \left(q, τ\right) , {E}_{Vs} \left({k}_{1}^{+}, τ\right) , … , {E}_{Vs} \left({k}_{P}^{+}, τ\right) ∈ {ℝ}^{{C}_{out} \times T}$ .

Contrastive learning may rely on a contrastive loss such as general contrastive InfoNCE loss [REF. 4] to train the visual encoder E*_{V}* to encourage similarities between both sequence-level and frame-level representations of positive pairs, and discourage similarities between negative representations, denoted as ${E}_{Vs} \left({k}_{1}^{-}\right) , … , {E}_{Vs} \left({k}_{N}^{-}\right)$ in sequence space and ${E}_{Vf} \left({k}_{1}^{-}, τ\right) , … , {E}_{Vf} \left({k}_{N}^{-}, τ\right)$ in frame space. The sequence-level encoder (e.g. the first encoder model) and the frame-level encoder (e.g. the second encoder model) may be trained jointly, e.g. through a common loss function. For instance, the InfoNCE [REF. 4] objective may be defined as: 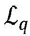 *=* 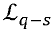 *+* 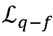 , where ${L}_{q - s} = - E \left(log\frac{{\sum }_{p = 1}^{P} {e}^{Sim \left({E}_{Vs}\left(q\right),{E}_{Vs}\left({k}_{p}^{+}\right)\right)}}{{\sum }_{n = 1}^{N} {e}^{Sim \left({E}_{Vs}\left(q\right),{E}_{Vs}\left({k}_{n}^{-}\right)\right)}}\right) ,$ (6) ${L}_{q - f} = - E \left(log\frac{{\sum }_{p = 1}^{P} {e}^{{\sum }_{τ = 1}^{T} Sim \left({E}_{Vf}\left(q, τ\right),{E}_{Vf}\left({k}_{p}^{+}, τ\right)\right)}}{{\sum }_{n = 1}^{N} {e}^{{\sum }_{τ = 1}^{T} Sim \left({E}_{Vf}\left(q, τ\right),{E}_{Vf}\left({k}_{n}^{-}, τ\right)\right)}}\right) ,$ (7) where τ represents the frame index in the temporal dimension of frame-level representations, *P* represents the number of positive keys, *N* denotes the number of negative keys (e.g. *P* = 4 and *N* = 65,536 for experiments), and the similarity is computed as: $Sim \left(x, y\right) = \frac{ϕ \left(x\right) ⋅ ϕ \left(y\right)}{\left‖ϕ\left(x\right)\right‖ ⋅ \left‖ϕ\left(y\right)\right‖} ⋅ \frac{1}{Temp} ,$ (8) where *Temp* refers to the temperature hyper-parameter [REF. 5], and *ϕ* is a learnable mapping function (*e.g.,* a multi-layer perceptron projection head [REF. 6]) that can substantially improve the learned representations.

For transferring the visual encoder on downstream tasks, the frame-level encoder E*_{Vf}* may be attached to a fully-connected layer followed by a Softmax Layer to predict per-frame actions. The output size of each fully-connected layer depends on the number of action classes (see Tab. 1). Then, the visual encoder E*_{V}* may be re-trained with action labels. For processing long sequences, it is possible to use a sliding window to extract features for a temporal segment and to use Binary Cross Entropy loss to optimize the visual encoder step by step. In this way, the visual encoder E*_{V}* can be re-trained end-to-end instead of pre-extracting features for all frames. In the inference stage, the predictions of all the temporal sliding windows may be combined in an online manner [REF. 7].

The inventors evaluated the temporal action segmentation and transfer ability of LAC by both *linear evaluation* (*i.e.,* by training only the fully-connected layer while keeping frozen the backbone) and *fine-tuning evaluation* (*i.e.,* by refining the whole network) on three action segmentation datasets. In linear evaluation, the results suggest that the weights of the model can be well pre-trained without action labels, providing a strong transfer ability, and that the pre-trained visual encoder is generic enough to extract meaningful action features from skeleton sequences. As regards the fine-tuning results, where the whole network is re-trained, the self-supervised pre-trained model also performs competitively compared to supervised pre-trained models. From these results, it can be concluded that collecting a large-scale trimmed skeleton dataset, without the need of action annotation, can be beneficial to downstream fine-grained tasks for untrimmed videos.

In many real-world applications, labeled data may be lacking, which makes it challenging to train models with good performance. To evaluate LAC in such cases, the visual encoder pre-trained on one dataset was transferred onto all the (three) tested datasets by fine-tuning with only 5% and 10% of the labeled data. While the accuracy of the visual encoder [REF. 3] significantly decreases without pre-training, LAC with prior action representation learning achieves good performance on all datasets in such setting.

When compared to other state-of-the-art approaches, LAC, even with self-supervised pre-training, outperforms all tested previous skeleton-based approaches with supervised pre-training on the target real-world datasets in a large margin. It suggests that composed motions are important to increase the expressive power of the visual representation and the end-to-end fine-tuning can benefit downstream tasks. Even if one of the datasets does not contain composed actions, the performance is still slightly improved by learning a fine-grained skeleton representation.

The generation ability of the generation module was also evaluated per se. To visualize an example of motion composition inference of two videos, reference is made to Fig. 3. Figure 3 shows selected frames 21 of a first video and selected frames 22 of a second video, and the corresponding skeleton sequences 23, 24 extracted from said videos. The skeleton sequences 23, 24 are examples of an evolution of a graph representation.

Each skeleton sequence 23, 24 may be characterized by certain motion features (e.g. motion 1, motion 2 respectively) and certain static features (e.g. static 1, static 2 respectively). The input pair of videos and corresponding skeleton sequences 23, 24 have simple motion, namely here raising an arm and squatting down respectively. The right part of Fig. 3 shows decoded output signals 25, 26 composed from the input skeleton sequences 23, 24 thanks to the generation module. Both output signals 25, 26 show a skeleton simultaneously raising an arm and squatting down. While the first output signal 25 has the posture (or more generally the static or character features) of the first skeleton sequence 23, the second output signal 26 has the static features of the second skeleton sequence 24. This visualization demonstrates that 'Static' and 'Motion' are well disentangled and the high-level motions can be effectively composed by decoding the linear combination of both latent 'Motion' components learned by the proposed generation module.

Further investigation revealed that that each one of the pattern-related directions represents a basic high-level motion transformation (*e.g.,* in the experiments carried out, *d*_{***m***32} represents bending over) and the corresponding magnitude represents the range of the motion.

Further experiments showed that, without learning a composed action representation, the visual encoder has a weak capability to learn features on top of an untrimmed skeleton sequence. Conversely, combining motions from at least two skeleton sequences in the pre-training stage can significantly improve the representation ability of the visual encoder and generalize better to real-world untrimmed action segmentation tasks.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A generation module (10) for generating a composed output signal (***p**_{mm',c}, **p***_{*mm'*,*c'*}) from two or more input signals (***p**_{m,c}, **p**_{m',c'}*) representing respective patterns, wherein the two or more input signals are selected from a group comprising a plurality of images, a video, an audio track, an electrical input, or a combination thereof, the generation module being configured to:
- encode (i) the two or more input signals (***p**_{m,c}, **p**_{m',c'}*) onto a latent space;
- decompose (ii) the encoded input signals into a first component (***r***_{*m*'} ***r***_{*m*'}) along one or more pattern-related directions (*d*_{***m***1}, *d*_{***m***2},..., *d_{**m**J}*) of the latent space, and a second component (***r**_{c}, **r**_{c'})* along one or more pattern-unrelated directions (*d*_{*c*1}, *d*_{*c*2},..., *d_{cK}*) of the latent space;
- generate (iii) a latent output signal having, as the first component, a combination of the respective first components (***r***_{*m*'} ***r***_{*m*'}) of at least two of the encoded input signals;
- decode (iv) the latent output signal to obtain the composed output signal (***p**_{mm',c}, **p**_{mm',c'}*).

2. The generation module of claim 1, wherein at least one of the input signals comprises a sequence of frames (21, 22), and optionally wherein the sequence of frames represents an evolution of a graph representation (23, 24).

3. The generation module of claim 1 or 2, wherein the patterns include actions performed by an object or a living being.

4. The generation module of any one of claims 1 to 3, wherein the one or more pattern-related directions (*d*_{***m***1}, *d*_{***m***2},..., *d_{**m**J}*) relate to dynamic information of the input signals and the one or more pattern-unrelated directions (*d*_{*c*1}, *d*_{*c*2},*..., d_{cK}*) relate to static information of the input signals.

5. The generation module of any one of claims 1 to 4, wherein the generation module (10) is configured to output the composed output signal (***p**_{mm'c}, **p**_{mm',c'}*) in a same space as the input signals (***p**_{m,c}, **p**_{m',c'}*)_{.}

6. The generation module of any one of claims 1 to 5, wherein the combination comprises a linear combination.

7. A computer-implemented generation method for generating a composed output signal (***p***_{*mm'*,}*_{c}, **p***_{*mm'*,*c'*}) from two or more input signals (***p**_{m,c}, p_{**m**',c'}*) representing respective patterns, wherein the two or more input signals are selected from a group comprising a plurality of images, a video, an audio track, an electrical input, or a combination thereof, the generation method comprising:
- encoding (i) the two or more input signals (***p**_{m,c}, **p**_{m',c'}*) onto a latent space;
- decomposing (ii) the encoded input signals into a first component (***r**ₘ*, ***r***_{*m*'}) along one or more pattern-related directions (*d*_{***m***1}, *d*_{***m***2},..., *d_{**m**J}*) of the latent space, and a second component (***r**_{c}, **r**_{c'})* along one or more pattern-unrelated directions (*d*_{***c***1}, *d*_{***c***2},..., *d_{**c**K}*) of the latent space;
- generating (iii) a latent output signal having, as the first component, a combination of the respective first components (***r**ₘ, **r***_{*m*'}) of at least two of the encoded input signals;
- decoding (iv) the latent output signal to obtain the composed output signal (***p**_{mm',c}, **p**_{mm',c'}*).

8. A computer-implemented training method for the generation module (10) of any one of claims 1 to 6, comprising:
- providing two or more input signals (***p**_{m,c}, **p**_{m',c'}*);
- encoding (i) the input signals (***p**_{m,c}, **p**_{m',c'}*) onto a latent space with the generation module (10);
- decomposing (ii) the encoded input signals into a first component (***r**ₘ, **r***_{*m*'}) along one or more pattern-related directions (*d*_{***m***1}, *d*_{***m***2},..., *d_{**m**J}*) of the latent space, and a second component (***r**_{c}, **r***_{*c*'}) along one or more pattern-unrelated directions (*d*_{***c***1}, *d*_{***c***2},..., *d_{**c**K}*) of the latent space;
- generating (iii) at least one latent output signal having, as the first component, the first component (***r**ₘ*) of one of the encoded input signals and, as the second component, the second component (***r**_{c'}*) of another one of the input signals;
- decoding (iii) the at least one latent output signal;
- training the generation module based on the at least one decoded output signal (***p**_{m,c'}*, ***p**_{m',c}*).

9. The training method of claim 8, wherein the input signals (***p**_{m,c}, **p**_{m',c'}*) are associated with respective labels, the at least one decoded output signal (***p**_{m,c}', **p**_{m',c}*) is associated with the label of the one encoded input signal, and the training is supervised based on the labels.

10. A computer-implemented training method for a pattern segmentation system, comprising:
- providing a dataset comprising input signals (***p**_{m,c}, **p**_{m',c'}*) representing respective patterns;
- generating at least one composed output signal (***p**_{mm',c}, **p**_{mm',c'}*) from the input signals with the generation module (10) of any one of claims 1 to 6 or the generation method of claim 7;
- training the pattern segmentation system based on the dataset and the at least one composed output signal (***p**_{mm',c}*, ***p**_{mm',c'}*).

11. The training method of claim 10, wherein the training the pattern segmentation system is unsupervised, optionally using contrastive learning.

12. The training method of claim 10 or 11, wherein the at least one composed output signal comprises a first output signal (***p**_{mm',c}*) and a second output signal (***p**_{mm',c'}*) having a same pattern-related component and different pattern-unrelated components.

13. The training method of any one of claims 10 to 12, wherein an encoder of the pattern segmentation system comprises a first encoder model configured to encode the input signal as a whole and a second encoder model configured to encode the input signal frame by frame.

14. A computer program set including instructions for executing the steps of the method of any one of claims 7 to 13 when said program set is executed by at least one computer.

15. A recording medium readable by at least one computer and having recorded thereon at least one computer program including instructions for executing the steps of the method of any one of claims 7 to 13.

## Patentansprüche

1. Erzeugungsmodul (10) zum Erzeugen eines zusammengesetzten Ausgangssignals (*p*_{*mm'*,*c*}, *p*_{*mm'*,*c'*}) aus zwei oder mehreren Eingangssignalen (*p_{m,c,} p_{m',c'}*), die jeweilige Muster darstellen, wobei die zwei oder mehreren Eingangssignale aus einer Gruppe ausgewählt werden, die eine Vielzahl von Bildern, ein Video, eine Tonspur, eine elektrische Eingabe oder eine Kombination davon umfasst, wobei das Erzeugungsmodul konfiguriert ist zum:
- Codieren (i) der zwei oder mehreren Eingangssignale (*p_{m,c}*, *p*_{*m'*,*c'*}) auf einen latenten Raum;
- Zerlegen (ii) der codierten Eingangssignale in eine erste Komponente (*rₘ*, *r_{m'}*) entlang einer oder mehrerer musterverbundenen Richtungen (*d*_{*m*1}, *d*_{*m*2}, ... , *d_{mJ}*) des latenten Raums und in eine zweite Komponente (*r_{c}*, *r_{c'}*) entlang einer oder mehrerer musterunverbundenen Richtungen (*d*_{*c*1}, *d*_{*c*2}, ... , *d_{cK}*) des latenten Raums;
- Erzeugen (iii) eines latenten Ausgangssignals, das als die erste Komponente eine Kombination der jeweiligen ersten Komponenten (*rₘ*, *r_{m'}*) von mindestens zweien der codierten Eingangssignale aufweist;
- Decodieren (iv) des latenten Ausgangssignals, um das zusammengesetzte Ausgangssignal (*p_{mm',c'}, p_{mm',c'}*) zu erzielen.

2. Erzeugungsmodul nach Anspruch 1, wobei mindestens eines der Eingangssignale eine Sequenz von Einzelbildern (21, 22) umfasst, und wobei wahlweise die Sequenz von Einzelbildern eine Entwicklung einer graphischen Darstellung (23, 24) darstellt.

3. Erzeugungsmodul nach Anspruch 1 oder 2, wobei die Muster Aktionen umfassen, die von einem Objekt oder einem Lebewesen ausgeführt werden.

4. Erzeugungsmodul nach einem der Ansprüche 1 bis 3, wobei die eine oder die mehreren musterverbundenen Richtungen (*d*_{*m*1}, *d*_{*m*2}, ... , *d_{mJ}*) dynamische Informationen der Eingangssignale betreffen, und die eine oder die mehreren musterunverbundenen Richtungen (*d*_{*c*1}, *d*_{*c*2}, ... , *d_{cK}*) statische Informationen der Eingangssignale betreffen.

5. Erzeugungsmodul nach einem der Ansprüche 1 bis 4, wobei das Erzeugungsmodul (10) dazu konfiguriert ist, das zusammengesetzte Ausgangssignal (*p_{mm',c}, p_{mm',c'}*) in dem gleichen Raum wie die Eingangssignale (***p**_{m,c}, **p**_{m',c'}*) auszugeben.

6. Erzeugungsmodul nach einem der Ansprüche 1 bis 5, wobei die Kombination eine lineare Kombination umfasst.

7. Computerumgesetztes Erzeugungsverfahren zum Erzeugen eines zusammengesetzten Ausgangssignals (*p_{mm',c}, p*_{*mm'*,*c'*}) aus zwei oder mehreren Eingangssignalen (*p_{m,c}, p*_{*m',c*'}), die jeweilige Muster darstellen, wobei die zwei oder mehreren Eingangssignale aus einer Gruppe ausgewählt werden, die eine Vielzahl von Bildern, ein Video, eine Tonspur, eine elektrische Eingabe oder eine Kombination davon umfassen, wobei das Erzeugungsverfahren umfasst:
- Codieren (i) der zwei oder mehreren Eingangssignale (*p_{m,c}, p_{m',c'}*) auf einen latenten Raum;
- Zerlegen (ii) der codierten Eingangssignale in eine erste Komponente (*rₘ, r_{m'}*) entlang einer oder mehrerer musterverbundenen Richtungen (*d*_{*m*1}*, d*_{*m*2}, ... , *d_{mJ}*) des latenten Raums und in eine zweite Komponente (*r_{c}, r_{c'}*) entlang einer oder mehrerer musterunverbundenen Richtungen (*d*_{*c*1}*, d*_{*c*2}, ... , *d_{cK}*) des latenten Raums;
- Erzeugen (iii) eines latenten Ausgangssignals, das als die erste Komponente eine Kombination der jeweiligen ersten Komponenten (*rₘ, r_{m'}*) von mindestens zweien der codierten Eingangssignale aufweist;
- Decodieren (iv) des latenten Ausgangssignals, um das zusammengesetzte Ausgangssignal (*p_{mm',c}, p*_{*mm'*,*c'*}) zu erzielen.

8. Computerumgesetztes Trainingsverfahren für das Erzeugungsmodul (10) nach einem der Ansprüche 1 bis 6, umfassend:
- Bereitstellen von zwei oder mehreren Eingangssignale (*p_{m,c}, p_{m',c'}*);
- Codieren (i) der Eingangssignale (*p_{m,c}, p_{m',c'}*) auf einen latenten Raum mit dem Erzeugungsmodul (10);
- Zerlegen (ii) der codierten Eingangssignale in eine erste Komponente (*rₘ, r_{m'}*) entlang einer oder mehrerer musterverbundenen Richtungen (*d*_{*m*1}, *d*ₘ₂, ... , *d_{mJ}*) des latenten Raums und in eine zweite Komponente (*r_{c}, r*_{*c*'}) entlang einer oder mehrerer musterunverbundenen Richtungen (*d*_{*c*1}, *d*_{*c*2}, ... , *d_{cK}*) des latenten Raums;
- Erzeugen (iii) mindestens eines latenten Ausgangssignals, das als die erste Komponente die erste Komponente (*rₘ*) eines der codierten Eingangssignale und als die zweite Komponente die zweite Komponente (*r_{c'}*) eines anderen der Eingangssignale aufweist;
- Decodieren (iii) des mindestens einen latenten Ausgangssignals;
- Trainieren des Erzeugungsmoduls basierend auf dem mindestens einen decodierten Ausgangssignal (*p_{m,c'}*, *p_{m',c}*).

9. Trainingsverfahren nach Anspruch 8, wobei die Eingangssignale (*p_{m,c}, p_{m',c'}*) jeweiligen Etiketten zugeordnet sind, wobei das mindestens eine decodierte Ausgangssignal (*p_{m,c'}, p*_{*m'*,*c*}) dem Etikett des einen codierten Eingangssignals zugeordnet ist, und das Trainieren basierend auf den Etiketten überwacht wird.

10. Computerumgesetztes Trainingsverfahren für ein Mustersegmentierungssystem, umfassend:
- Bereitstellen eines Datensatzes, der Eingangssignale (*p_{m,c}, p_{m',c'}*) umfasst, die jeweilige Muster darstellen;
- Erzeugen mindestens eines zusammengesetzten Ausgangssignals (*p_{mm',c}, p_{mm',c'}*) aus den Eingangssignalen mit dem Erzeugungsmodul (10) nach einem der Ansprüche 1 bis 6 oder dem Erzeugungsverfahren nach Anspruch 7;
- Trainieren des Mustersegmentierungssystems basierend auf dem Datensatz und dem mindestens einen zusammengesetzten Ausgangssignal (*p_{mm',c}, p_{mm',c'}*).

11. Trainingsverfahren nach Anspruch 10, wobei das Trainieren des Mustersegmentierungssystems nicht überwacht ist, wahlweise unter Verwendung von kontrastivem Lernen.

12. Trainingsverfahren nach Anspruch 10 oder 11, wobei das mindestens eine zusammengesetzte Ausgangssignal ein erstes Ausgangssignal (*p_{mm',c}*) und ein zweites Ausgangssignal (*p_{mm',c'}*) umfasst, welche die gleiche musterverbundene Komponente und verschiedene musterunverbundene Komponenten aufweisen.

13. Trainingsverfahren nach einem der Ansprüche 10 bis 12, wobei ein Codierer des Mustersegmentierungssystems ein erstes Codierermodell, das dazu konfiguriert ist, das Eingangssignal insgesamt zu codieren, und ein zweites Codierermodell, das dazu konfiguriert ist, das Eingangssignal Einzelbild für Einzelbild zu codieren, umfasst.

14. Computerprogrammsatz, umfassend Anweisungen zum Durchführen der Schritte des Verfahrens nach einem der Ansprüche 7 bis 13, wenn der Programmsatz durch mindestens einen Computer durchgeführt wird.

15. Aufzeichnungsmedium, das durch mindestens einen Computer lesbar ist und auf dem mindestens ein Computerprogramm aufgezeichnet ist, das Anweisungen zum Durchführen der Schritte des Verfahrens nach einem der Ansprüche 7 bis 13 umfasst.

## Revendications

1. Module de génération (10) pour générer un signal de sortie composé (*p_{mm',c}, p_{mm',c'}*) à partir de deux signaux d'entrée (*p_{m,c}, p_{m',c'}*) ou plus représentant des motifs respectifs, dans lequel les deux signaux d'entrée ou plus sont choisis dans un groupe comprenant une pluralité d'images, une vidéo, une piste audio, une entrée électrique ou une combinaison de celles-ci, le module de génération étant configuré pour :
- encoder (i) les deux signaux d'entrée (*p_{m,c}, p_{m',c'}*) ou plus dans un espace latent ;
- décomposer (ii) les signaux d'entrée encodés en une première composante (*rₘ, r_{m'}*) le long d'une ou plusieurs directions liées au motif (*d*_{*m*1}, *d*ₘ₂, ..., *d_{mJ}*) de l'espace latent et une deuxième composante (*r_{c}, r_{c'}*) le long d'une ou plusieurs directions non liées au motif (*d_{c1}*, *d*_{*c*2}, ..., *d_{cK}*) de l'espace latent ;
- générer (iii) un signal de sortie latent ayant comme première composante une combination des premières composantes (*rₘ, r_{m'}*) respectives d'au moins deux des signaux d'entrée encodés ;
- décoder (iv) le signal de sortie latent pour obtenir le signal de sortie composé (*p_{mm',c}, p_{mm',c'}*).

2. Module de génération selon la revendication 1, dans lequel au moins un des signaux d'entrée comprend une séquence de trames (21, 22), et facultativement dans lequel la séquence de trames représente une évolution d'une représentation graphique (23, 24).

3. Module de génération selon la revendication 1 ou 2, dans lequel les motifs comprennent des actions effectuées par un objet ou un être vivant.

4. Module de génération selon l'une quelconque des revendications 1 à 3, dans lequel les une ou plusieurs directions liées au motif (*dₘ₁*, *dₘ₂*, ..., *d_{mJ}*) se rapportent à des informations dynamiques des signaux d'entrée, et les une ou plusieurs directions non liées au motif (*d_{c1}*, *d_{c2}*, ..., *d_{cK}*) se rapportent à des informations statiques des signaux d'entrée.

5. Module de génération selon l'une quelconque des revendications 1 à 4, dans lequel le module de génération (10) est configuré pour délivrer le signal de sortie composé (*p_{mm',c}, p_{mm',c'}*) dans un même espace que les signaux d'entrée (*p_{m,c}, p_{m',c'}*).

6. Module de génération selon l'une quelconque des revendications 1 à 5, dans lequel la combinaison comprend une combinaison linéaire.

7. Procédé de génération mis en œuvre par ordinateur pour générer un signal de sortie composé (*p_{mm',c}, p_{mm',c'}*) à partir de deux signaux d'entrée (*p_{m,c}, p_{m',c'}*) ou plus représentant des motifs respectifs, dans lequel les deux signaux d'entrée ou plus sont choisis dans un groupe comprenant une pluralité d'images, une vidéo, une piste audio, une entrée électrique ou une combinaison de celles-ci, le procédé de génération comprenant les étapes suivantes :
- encoder (i) les deux signaux d'entrée (*p_{m,c}, p_{m',c'}*) ou plus dans un espace latent ;
- décomposer (ii) les signaux d'entrée encodés en une première composante (*rₘ, r_{m'}*) le long d'une ou plusieurs directions liées au motif (*dₘ₁*, *d*_{m*2*}, ..., *d_{mJ}*) de l'espace latent et une deuxième composante (*r_{c}, r_{c'}*) le long d'une ou plusieurs directions non liées au motif (*d_{c1}*, *d*_{*c*2}, ..., *d_{cK}*) de l'espace latent ;
- générer (iii) un signal de sortie latent ayant comme première composante une combination des premières composantes (*rₘ, r_{m'}*) respectives d'au moins deux des signaux d'entrée encodés ;
- décoder (iv) le signal de sortie latent pour obtenir le signal de sortie composé (*p_{mm',c}, p_{mm',c'}*).

8. Procédé d'entraînement mis en œuvre par ordinateur pour le module de génération (10) selon l'une quelconque des revendications 1 à 6, comprenant les étapes suivantes :
- fournir deux signaux d'entrée (*p_{m,c}, p_{m',c'}*) ou plus ;
- encoder (i) les signaux d'entrée (*p_{m,c}, p_{m',c'}*) dans un espace latent à l'aide du module de génération (10) ;
- décomposer (ii) les signaux d'entrée encodés en une première composante (*r*_{*m*'} *r_{m'}*) le long d'une ou plusieurs directions liées au motif (*dₘ₁*, *dₘ₂*, ..., *d_{mJ}*) de l'espace latent et une deuxième composante (*r_{c}, r_{c'}*) le long d'une ou plusieurs directions non liées au motif (*d_{c1}*, *d*_{*c*2}, ..., *d_{cK}*) de l'espace latent ;
- générer (iii) au moins un signal de sortie latent ayant comme première composante la première composante (*ᵣₘ*) de l'un des signaux d'entrée encodés, et ayant comme deuxième composante la deuxième composante (*r_{c'}*) d'un autre des signaux d'entrée ;
- décoder (iii) l'au moins un signal de sortie latent ;
- entraîner le module de génération sur la base de l'au moins un signal de sortie décodé (*p_{m,c'}, p_{m',c}*).

9. Procédé d'entraînement selon la revendication 8, dans lequel les signaux d'entrée (*p_{m,c}, p_{m',c'}*) sont associés à des étiquettes respectives, l'au moins un signal de sortie décodé (*p_{m,c'}, p_{m',c}*) est associé à l'étiquette dudit signal d'entrée encodé, et l'entraînement est supervisé sur la base des étiquettes.

10. Procédé d'entraînement mis en œuvre par ordinateur pour un système de segmentation de motif, comprenant :
- fournir un ensemble de données comprenant des signaux d'entrée (*p_{m,c}, p_{m',c'}*) représentant des motifs respectifs ;
- générer au moins un signal de sortie composé (*p_{mm',c}, p_{mm',c'}*) à partir des signaux d'entrée à l'aide du module de génération (10) selon l'une quelconque des revendications 1 à 6 ou le procédé de génération selon la revendication 7 ;
- entraîner le système de segmentation de motif sur la base de l'ensemble de données et de l'au moins un signal de sortie composé (*p_{mm',c}, p_{mm',c'}*).

11. Procédé d'entraînement selon la revendication 10, dans lequel l'entraînement du système de segmentation de motif est non supervisé et utilise facultativement l'apprentissage contrastif.

12. Procédé d'entraînement selon la revendication 10 ou 11, dans lequel l'au moins un signal de sortie composé comprend un premier signal de sortie (*p_{mm',c}*) et un deuxième signal de sortie (*p_{mm',c'}*) ayant une même composante liée au motif et des composantes différentes non liées au motif.

13. Procédé d'entraînement selon l'une quelconque des revendications 10 à 12, dans lequel un encodeur du système de segmentation de motif comprend un premier modèle d'encodeur configuré pour encoder le signal d'entrée dans son ensemble, et un deuxième modèle d'encodeur configuré pour encoder le signal d'entrée trame par trame.

14. Ensemble de programmes informatiques comportant des instructions pour exécuter les étapes du procédé selon l'une quelconque des revendications 7 à 13 lorsque ledit ensemble de programmes est exécuté par au moins un ordinateur.

15. Support d'enregistrement lisible par au moins un ordinateur sur lequel est enregistré au moins un programme informatique comportant des instructions pour exécuter les étapes du procédé selon l'une quelconque des revendications 7 à 13.
